# FASCICULE DE BREVET EUROPEEN

(11) **EP 1 378 106 B1**
(45) Date de publication et mention de la délivrance du brevet: **20.06.2007**
(21) Numéro de dépôt: 02761931.1
(22) Date de dépôt: 09.04.2002
(51) Int. Cl.: H04L 29/06, H04Q 7/22, H04L 12/18

(54) **SYSTEME D'ECHANGE DE DONNEES NUMERIQUES**
DIGITALES DATENAUSTAUSCHSYSTEM
DIGITAL DATA EXCHANGE SYSTEM

(30) Priorité: 10.04.2001 FR 0104849
(43) Date de publication de la demande: 07.01.2004
(73) Titulaire: Evenium, 75009 Paris (FR)
(72) Inventeur: AMRAM, Eric, F-92200 Neuilly-sur-Seine (FR); COHEN SOLAL, Avner, F-75015 Paris (FR)
(74) Mandataire: Thévenet, Jean-Bruno
(86) Numéro de dépôt international: PCT/FR2002/001245
(87) Numéro de publication internationale: WO 2002/084978

(56) Documents cités:
- EP-A- 0 841 828
- US-A- 5 796 351

## Description

### Domaine de l'invention

La présente invention se rapporte à un dispositif d'échange de données numériques entre deux interlocuteurs mis en présence l'un de l'autre lors d'un événement particulier tel qu'un salon professionnel.

### Art antérieur

Actuellement, dans les salons professionnels par exemple, lorsque deux personnes se rencontrent et que l'une de ces personnes souhaite recevoir de l'autre des informations complémentaires, et réciproquement, comme un curriculum vitae, une plaquette d'entreprise, des documentations de produits, des fichiers audio ou vidéo de démonstration, ou tous autres renseignements non immédiatement disponibles, ils procèdent à un échange de leur carte de visite respective mentionnant leurs coordonnées de contact, notamment une adresse électronique, et précisent oralement ou par écrit ces données complémentaires qu'ils souhaitent recevoir l'un de l'autre. De retour à leur bureau ou leur domicile, une fois le salon achevé, ces personnes peuvent alors adresser les éléments demandés à leur interlocuteur par courrier, télécopie ou mieux encore courrier électronique, si ces éléments sont disponibles sous forme de données numériques. En variante, chaque personne peut aussi aller elle-même récupérer ces données sur un site Internet dont leur interlocuteur leur aura fourni l'adresse URL et éventuellement un code d'accès confidentiel.

Ce processus essentiellement différé de fourniture d'informations est contraignant et peu approprié en cas de contacts multiples qui supposent un échange d'un très grand nombre de données à un nombre élevé d'interlocuteurs.

Aussi, depuis quelques années est apparu ce qu'il convient d'appeler une « carte de visite CDROM » qui est en fait un disque numérique compact lisible par ordinateur et ayant un format de carte de crédit. Ainsi, il devient possible, lors d'une rencontre, de transmettre immédiatement à son interlocuteur des données numériques telles que une ou plusieurs de celles définies précédemment. Toutefois, la mémoire de stockage de ces cartes est limitée et, une fois le disque compact gravé, il ne peut plus être modifié. Les informations fournies sont donc figées à la date de leur fabrication sans possibilité de mise à jour ultérieure. De plus, le coût de production de telles cartes à CDROM est encore relativement élevé.

Plus récemment est apparu sur le marché des dispositifs informatiques portables appelés « assistant personnel numérique (PDA) » qui, au moyen de liaisons infrarouge ou radio, permettent un échange de données numériques avec un ordinateur externe ou entre eux. Toutefois, ici encore, le volume d'information pouvant être transmis est limité par la capacité mémoire de ces dispositifs (difficulté d'échange de fichiers vidéo par exemple) et, en outre, la transmission entre deux de ces dispositifs nécessite une parfaite compatibilité et le respect d'un protocole d'échange précis (notamment au niveau du positionnement des dispositifs dans le cas d'une liaison infrarouge).

Un autre systeme d'échange de données est connu du document US 5796351.

### Objet et définition de l'invention

La présente invention se propose de pallier ces inconvénients avec un procédé selon la revendication 1 et un système selon la revendication 13 d'échange de données numériques entre deux interlocuteurs qui permettent de façon simple la communication d'une grande quantité de données à de multiples intervenants ainsi que leur mise à jour automatique.

Ces buts sont atteints par un procédé d'échange de données numériques entre une pluralité d'utilisateurs, chacun de ces utilisateurs étant muni d'un dispositif portatif d'émission et de réception de données numériques, caractérisé en ce que l'on entre au niveau d'un premier ensemble informatique lesdites données numériques destinées à être échangées entre les utilisateurs, on affecte à chacune des données numériques saisies au moins un code d'identification déterminé, on transfère chacun des codes d'identification déterminés ainsi affectés sur le dispositif portatif de l'utilisateur dont on a entré préalablement les données numériques associées aux dits codes d'identification déterminés, on établit deux à deux des liaisons entre les dispositifs portatifs de différents utilisateurs au cours desquelles ils se transmettent entre eux leur au moins un code d'identification déterminé, on transfère depuis chacun des dispositifs portatifs et vers ledit premier ensemble informatique les codes d'identification déterminés ainsi reçus, et on met à disposition de chaque utilisateur desdits dispositifs portatifs les données numériques associées à ces codes d'identification déterminés ainsi transférés.

La première étape d'entrée des données numériques au niveau dudit premier ensemble informatique est effectuée au travers d'une interface utilisateur de cet ensemble informatique. Cette interface utilisateur est de préférence choisie parmi l'une des interfaces suivantes: Web, e-mail, terminal.

La deuxième étape d'affectation dudit code d'identification des données numériques par ledit premier ensemble informatique peut être effectuée selon un processus de création aléatoire ou bien encore à partir d'un numéro de carte unique entré par l'utilisateur au niveau dudit premier ensemble informatique.

La troisième étape de transfert dudit code d'identification déterminé vers ledit dispositif portatif peut être effectuée par l'intermédiaire d'un second ensemble informatique local relié ou non audit premier ensemble informatique au travers d'un réseau de communication.

La quatrième étape de mise en relation de deux dispositifs portatifs est effectuée par une liaison de type électrique, magnétique, acoustique, optique ou radio-fréquence.

La cinquième étape de transfert dudit code d'identification déterminé vers ledit premier ensemble informatique peut être effectuée par l'intermédiaire d'un second ensemble informatique local relié ou non audit premier ensemble informatique au travers d'un réseau de communication.

Selon le mode de réalisation envisagé, la sixième étape de mise à disposition desdites données numériques aux utilisateurs peut être effectuée par un envoi de ces données numériques à une adresse électronique de l'utilisateur ou bien par une consultation de ces données numériques directement au niveau dudit premier ensemble informatique par l'intermédiaire d'un réseau de communication.

La présente invention concerne également le système d'échange de données numériques mettant en oeuvre le procédé précité.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique d'un système d'échange de données numériques selon l'invention,
- les figures 2A, 2B, 2C montrent trois exemples de structures de données échangées dans le système de la figure 1,
- la figure 3 est un organigramme illustrant le procédé d'échange mis en oeuvre dans le système de la figure1,
- la figure 4 illustre un premier exemple de réalisation d'un ensemble informatique mis en oeuvre dans le système de la figure1, et
- les figures 5A à 5C montrent trois exemples de réalisation d'un dispositif portatif mis en oeuvre dans le système de la figure1.

### Description détaillée d'un mode de réalisation préférentiel

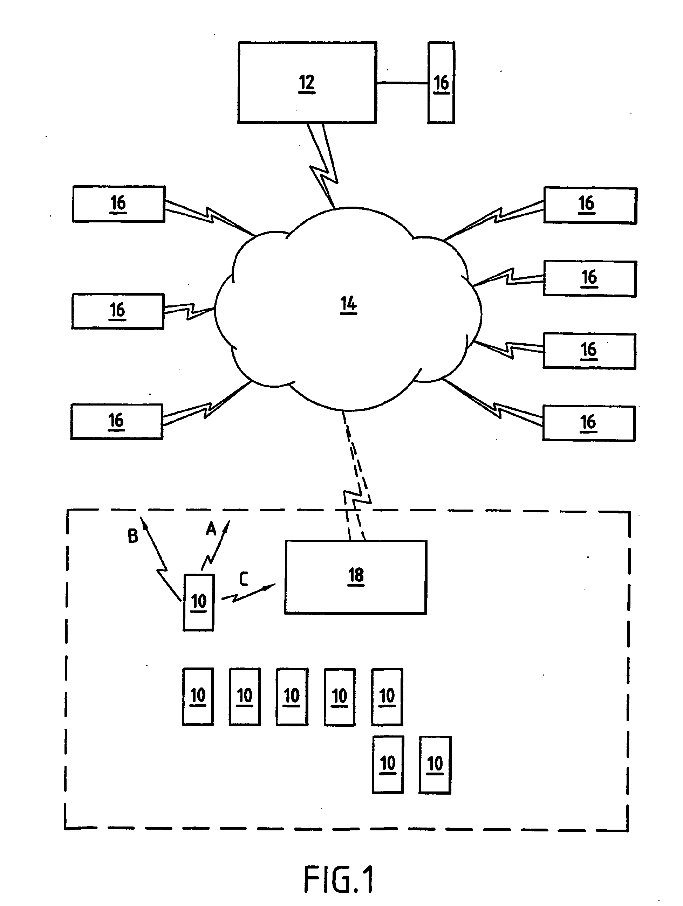

La figure 1 illustre un système d'échange de données numériques conforme à la présente invention.

On entend par données numériques tout type d'information pouvant être représenté sous une forme numérique. En l'espèce, il s'agit des informations que peuvent détenir une personne physique, un groupe de personnes, une entreprise ou bien encore une administration par exemple. A titre exemple parmi d'autres, on peut citer des données personnelles (état civil, coordonnées postales, etc.) ou professionnelles (curriculum vitae) relatives à un individu, des données commerciales relatives à une société (plaquettes d'entreprise, de produits) ou encore des données financières (comptes de la société). Ces différentes informations peuvent être présentes individuellement sur différents supports (audio, vidéo, texte, graphique) ou formats (Word, Excel, PDF, etc.) et accessibles au travers de moyens de consultation divers.

Lorsque deux personnes sont mis en présence et se rencontrent donc physiquement, elles ne peuvent pas toujours s'échanger les informations qu'elles souhaiteraient, soit parce que l'une d'elle ne possède pas le moyen pour recueillir l'information qui lui est proposée (par exemple une personne possède un PDA et l'autre pas), soit parce que ces informations ne sont pas immédiatement disponibles (par exemple il n'y a plus sur le stand de plaquette du produit recherché), soit encore parce qu'elles sont trop volumineuses (comptes consolidés d'un groupe de sociétés par exemple).

Aussi, selon l'invention, il est créé un système d'échange de données numériques dans lequel chaque personne amenée à transmettre des informations (disponibles sous une forme numérique) à une autre personne sur le lieu d'un événement ou d'une manifestation donnée (salon, foire, conférence, forum, festival, atelier, etc.), est munie d'un dispositif portatif 10 auto-alimenté (par piles ou batterie rechargeable) de la dimension d'une carte de visite ou de crédit qui comporte au moins d'une part des moyens mémoire aptes à emmagasiner une pluralité de codes d'identification échangeables et d'autre part des moyens de communication quelconques permettant de transférer un ou plusieurs de ces codes d'identification vers un dispositif portatif d'une autre personne lors de la rencontre physique de ces deux personnes. On notera qu'un transfert vers plusieurs personnes munies chacune d'un dispositif portatif est aussi envisageable.

Les moyens de communication précités sont avantageusement des moyens de couplage par boucle magnétique (notamment pour des échanges deux à deux), mais des moyens de liaison par faisceaux infrarouges, ondes sonores (liaison acoustique) ou ondes radio-fréquences est aussi envisageable. Les codes d'identification présents dans chaque dispositif portatif, et destinés à faire l'objet de l'échange lors de la mise en relation des personnes, correspondent chacun à une donnée numérique clairement identifiée de la personne titulaire du dispositif portatif (ou à laquelle il a été affecté) et que cette personne souhaite communiquer à des tiers.

Selon l'invention, l'ensemble de ces données numériques et les codes d'identification associés sont stockés dans un ensemble ou serveur informatique 12, en général distant du lieu de l'événement, et accessible à toutes les personnes susceptibles d'être mise en relation lors de l'événement concerné, soit directement (par un terminal utilisateur 16) ou au travers d'un réseau de communication 14, par exemple le réseau téléphonique commuté (RTC) ou tout autre réseau de communication analogue (GSM, LAN, Téléphone, Internet, etc.). De même, la communication des codes d'identification (référencée par les lettres A, B, C) entre cet ensemble informatique distant 12 dans lequel ils sont hébergés et les dispositifs portatifs 10 de chaque participant à l'événement est effectuée au travers de ce réseau de communication 14 soit (A) directement (les dispositifs portatifs comportant alors des moyens supplémentaires d'accès au réseau), soit (B) par l'intermédiaire des terminaux des utilisateurs 16 (les dispositifs portatifs comportant alors des moyens complémentaires d'interface avec ces terminaux), soit encore (C) de façon préférentielle par l'intermédiaire d'un ensemble informatique local 18 présent sur le lieu de l'évènement (les moyens de communication des dispositifs portatifs pouvant alors avantageusement servir aussi de moyens d'interface avec cet ensemble informatique local). Dans un mode de réalisation particulier, cet ensemble informatique local peut être dissocié du réseau de communication 14, le transfert des codes d'identification fournis à l'utilisateur par l'ensemble informatique distant 12 pouvant s'effectuer au moyen d'un clavier ou d'un lecteur de code à barres associé à l'ensemble informatique local. A l'issu du processus d'échange entre les différents participants de l'événement, les dispositifs portatifs auront emmagasinés un ensemble de codes d'identification qu'il devront alors retourner à l'ensemble informatique distant éventuellement par l'intermédiaire de l'ensemble informatique local relié ou non au réseau de communication. Dans ce dernier cas, le transfert des codes se fera alors de manière asynchrone en transférant physiquement les codes reçus par exemple au moyen d'une disquette ou d'un CD-ROM.

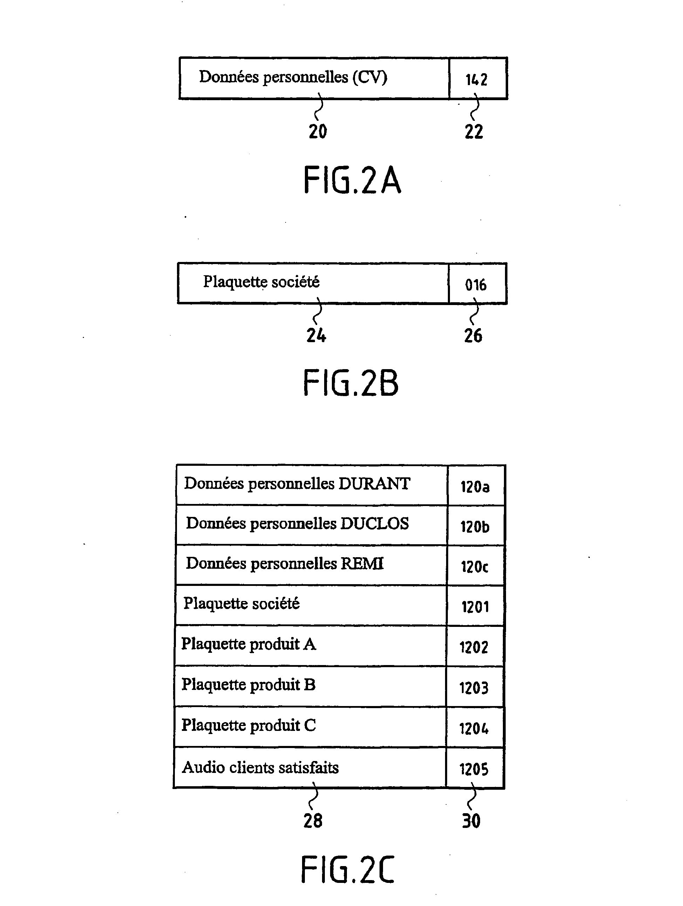

Les figures 2A, 2B, 2C montrent des exemples de données et de codes associés stockés au niveau de l'ensemble informatique distant 12.

Les figures 2A et 2B illustrent le type d'informations qui peut être échangé entre les différents participants d'un salon de recrutement. La figure 2A montre l'information mis à disposition du coté de la personne en recherche d'emploi, en l'espèce un curriculum vitae. Cette donnée 20 (en général de forme texte et graphique) porte un code d'identification 22 (par exemple 142) qui constitue ainsi un identifiant unique pour cette personne et qui sera seul stocké dans les moyens mémoire de son dispositif portatif. L'information disponible du coté de la société offreuse de service est illustrée à la figure 2B. Il s'agit en général d'une donnée 24 représentative d'une plaquette de présentation de la société avec les différents postes à pourvoir et les responsables à contacter. Elle porte aussi un code d'identification unique 26 (par exemple 016) qui sera mémorisé dans chacun des dispositifs portatifs des personnes représentant cette société sur un stand ou à tout autre emplacement défini du salon. Chaque société présente au salon possède ainsi un code d'identification différent qui lui est personnellement affecté pour la durée du salon, de même que chaque visiteur demandeur d'emploi.

La figure 2C est un autre exemple de données numériques qui peuvent être échangées lors d'un salon professionnel. Ces données 28 sont relatives à une société dont trois des salariés seront présents sur le salon. Elle peut par exemple souhaiter mettre à disposition des visiteurs une plaquette de sa société, les plaquettes de deux de ces produits, une vidéo d'un troisième et un enregistrement audio d'une enquête de satisfaction client. A chacune de ces données est affecté un code d'identification spécifique (y compris à la carte de visite renfermant certaines données personnelles de chacun des salariés présents sur le salon). Comme dans l'exemple précédent, l'ensemble des codes d'identification 30 et données 28 associées à chaque code est stocké dans l'ensemble informatique 12 et chaque participant au salon, visiteur ou exposant, est pourvu d'un dispositif portatif comportant initialement en mémoire les codes d'identification correspondant aux données qu'il souhaite communiquer aux tiers. Ainsi, par exemple, monsieur REMI comportera dans la mémoire de son dispositif portatif les codes 120c (correspondant à ses données personnelles) et 1201 à 1205 (correspondant aux données entreprise disponibles). On notera que ces codes d'identification relatifs à une même société peuvent tous dériver d'un code utilisateur unique (en l'espèce 120).

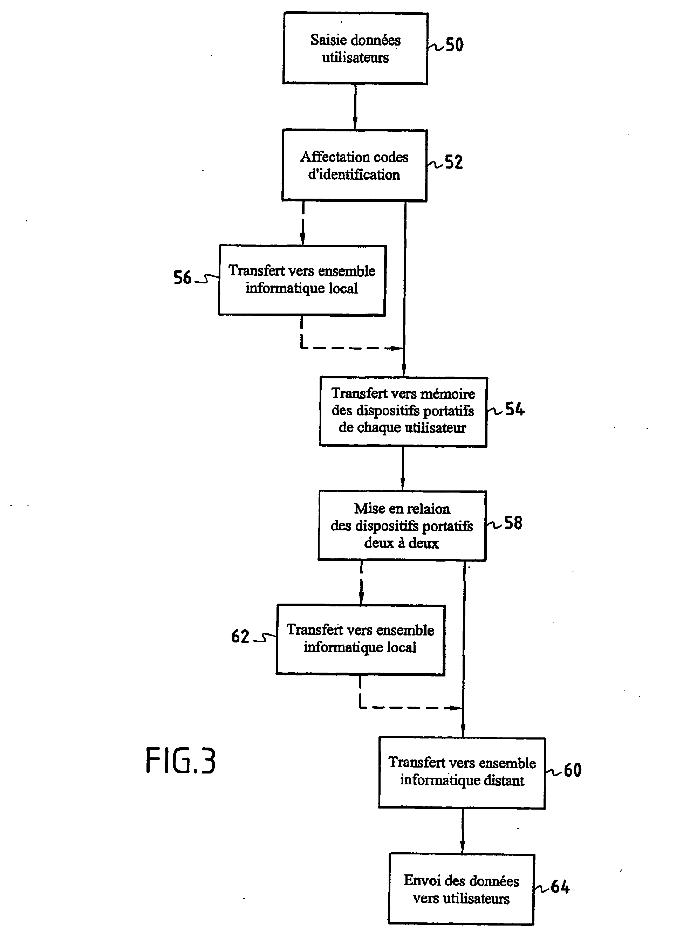

Le procédé mis en oeuvre pour réaliser l'échange des données numériques entre les différentes personnes présentes par exemple dans un salon professionnel est maintenant décrit en regard de la figure 3.

Il implique tout d'abord dans une première étape 50 d'entrer et de stocker ces différentes données dans l'ensemble informatique 12. L'entrée des données est effectuée par chacun des utilisateurs du système qui vont ainsi transférer à cet ensemble informatique les informations des types précités (données personnelles ; fichiers Word, Excel, PDF, etc. ; fichiers audio ou vidéo ; adresse URL ; etc.) qu'ils ont l'intention de communiquer aux tiers intéressés. Une fois ces informations enregistrées dans l'ensemble informatique 12, celui-ci va, dans une deuxième étape 52, affecter à chacune des informations entrées un code d'identification unique déterminé qui permettra ensuite de la retrouver. De préférence, cette affectation est faite très simplement selon un processus de création aléatoire.

On notera toutefois, dans une alternative possible, que ces codes d'identification peuvent aussi être élaborés à partir d'un numéro unique fournit à l'ensemble informatique également par l'utilisateur et identifiant de façon unique son dispositif portatif. Par exemple, on peut envisager que l'utilisateur achète dans une boutique quelconque (bureau de tabac, de poste, etc.) un dispositif portatif muni d'un tel numéro de carte ainsi que d'un code personnel d'accès, du type « à gratter », qui lui donne accès à l'ensemble informatique, et notamment à son interface utilisateur, à partir de laquelle il pourra entrer ses données numériques échangeables.

Dans une troisième étape 54, les codes d'identification mémorisés par les utilisateurs dans l'ensemble informatique, et seulement ces codes d'identification (par exemple 22, 26, 30), les données numériques associés (par exemple 20, 24, 28) restant stockées dans l'ensemble informatique 12, seront transférés dans les moyens mémoire des dispositifs portatifs, chaque dispositif portatif 10 étant chargé par le ou les codes d'identification saisis préalablement par l'utilisateur de ce dispositif. Dans une variante avantageuse du procédé, ces codes d'identification peuvent être transférés non pas directement au niveau de chaque dispositif portatif, mais dans l'ensemble informatique local 18 (étape 56) qui assurera l'interface avec ces dispositifs. Cet ensemble informatique local peut ou non être relié au réseau de communication 14. Dans ce dernier cas, le transfert des codes fournis à l'utilisateur par l'ensemble informatique distant 12 peut s'effectuer au moyen d'un clavier ou d'un lecteur de code à barres associé à l'ensemble informatique local. Avant tout échange, les seuls codes d'identification enregistrés dans les moyens mémoire sont donc ceux relatifs à la personne titulaire du dispositif portatif. La rencontre de deux participants et le premier échange d'informations qui en résulte s'effectue dans une étape suivante 58 par la mise en relation de leur deux dispositifs portatifs, leurs moyens de communication respectifs s'échangeant alors leur(s) code(s) d'identification qui est(sont) mémorisé(s) dans les moyens mémoire. Cette étape se répète pour les échanges suivants avec d'autres participants et reste possible tant que les moyens mémoire du dispositif portatif ne sont pas saturés (mémoire pleine).

Lorsque la mémoire est pleine, ou plus généralement à l'issue du salon, il est procédé dans une étape 60 au transfert des codes d'identification recueillis vers l'ensemble informatique 12 qui les mémorise. Dans une variante avantageuse du procédé, ces codes d'identification peuvent être transférés non pas directement depuis chaque dispositif portatif, mais depuis l'ensemble informatique local 18 (étape 62) qui assure alors l'interface avec l'ensemble informatique distant 12 au travers du réseau informatique 14. Dans une autre variante, cet ensemble informatique local peut être dissocié du réseau de communication et les codes transférés vers l'ensemble informatique distant de façon asynchrone par une simple disquette ou un CD-ROM. Une fois ces codes mémorisés, les données numériques associées à ces codes deviennent accessibles pour les utilisateurs qui peuvent en prendre connaissance directement au niveau de l'ensemble informatique distant 12 (au travers de son interface utilisateur et en précisant leur propre code d'identification), ou de préférence, dans une dernière étape 64, se les faire adresser automatiquement à leur adresse électronique ou par tout autre moyen, par exemple par courrier ou télécopie pour les éventuelles quelques personnes ne possédant pas une telle adresse électronique (ces coordonnées de contact ayant été bien entendu préalablement communiquées lors de la première saisie de l'étape 50).

On peut noter que la centralisation au niveau de l'ensemble informatique des codes d'identification échangés entre tous les participants d'un évènement donné ou d'une manifestation particulière (salon, foire, conférence, forum, festival, atelier, etc.) permet une mise à jour automatique et très simple des données numériques adressées à ces participants. En effet, l'ensemble informatique ayant une connaissance précise des utilisateurs ayant reçus précédemment telle ou telle donnée, il lui est possible lorsque l'une de ces données est mise à jour au travers de son interface utilisateur de communiquer automatiquement la nouvelle version du document correspondant à tous les utilisateurs ayant reçus la version précédente, cette communication se faisant de la même façon que précédemment (sauf demande de modification d'envoi mis à jour par un utilisateur).

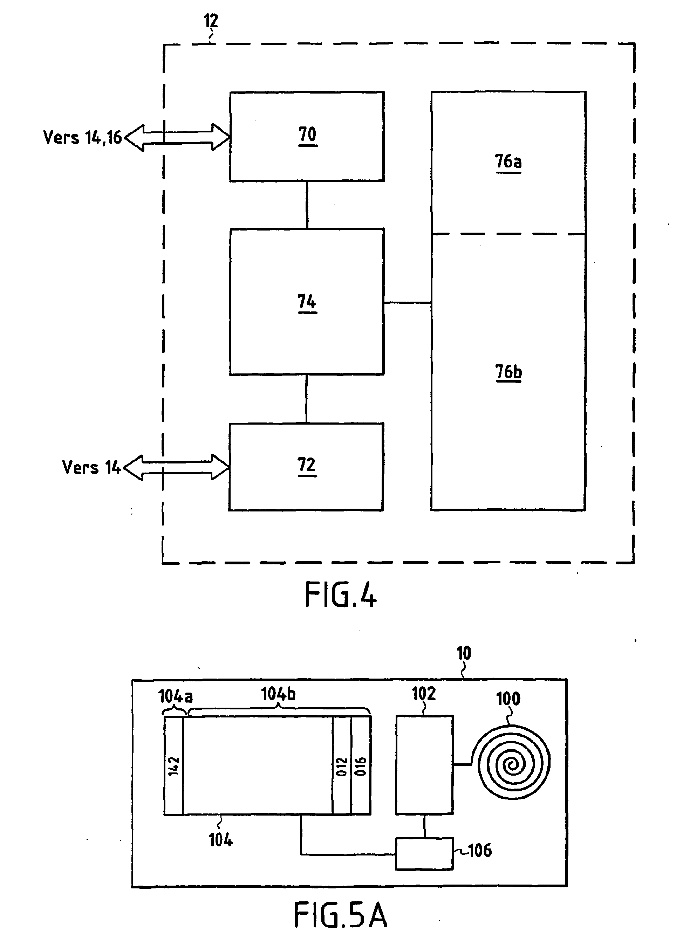

La structure de l'ensemble informatique distant 12 est décrit plus précisément sur la figure 4 qui montre les principales interfaces et fonctions de cet ensemble (à l'exception des fonctions courantes d'administration et de statistiques sur les données recueillies).

Cet ensemble informatique comporte tout d'abord une interface utilisateur 70 pour assurer la gestion des données numériques (et éventuellement numéro de carte) saisies par l'utilisateur, leur visualisation et leur mise à jour (ajout, modification, suppression). Cette interface de saisie peut être de tout type connu : simple terminal informatique, terminal téléphonique mobile, courrier électronique, page WEB, etc.. Il comporte également une interface de communication 72 pour assurer la gestion des échanges directement avec les dispositifs portatifs ou de préférence avec l'ensemble informatique local. Cette interface est une interface réseau de type connu, par exemple une interface RTC, Numéris, etc. Ces deux interfaces 70, 72 sont reliées à un module de traitement 74 auquel est associé une mémoire de stockage 76 de type RAM ou analogue (une mémoire de masse complémentaire (non représentée) est en outre prévue pour assurer une sauvegarde à long terme des différentes données).

Le module de traitement assure la gestion de la mémoire en fonction des informations et ordres reçus au travers des interfaces ainsi que la gestion des mises à jour dynamiques des données numériques stockées par les utilisateurs. Pour cela, le module de traitement détecte tout d'abord si un utilisateur modifie ses données numériques via l'interface utilisateur puis il recherche si d'autres utilisateurs ont reçus les données précédentes et, en cas de réponse positive, transmet à ces utilisateurs les données mises à jour (à moins par exemple que ces utilisateurs aient renoncés au préalable à les recevoir).

La mémoire de l'ensemble informatique distant est organisée de préférence en deux zones : une première zone 76a pour le stockage des données numériques saisies par l'utilisateur (données émetteur) et une seconde zone 76b pour le stockage des données numériques correspondantes aux codes d'identification reçus des autres participants (données récepteur). Ces données émetteur ou récepteur sont bien entendu accessibles au travers de l'interface utilisateur 70.

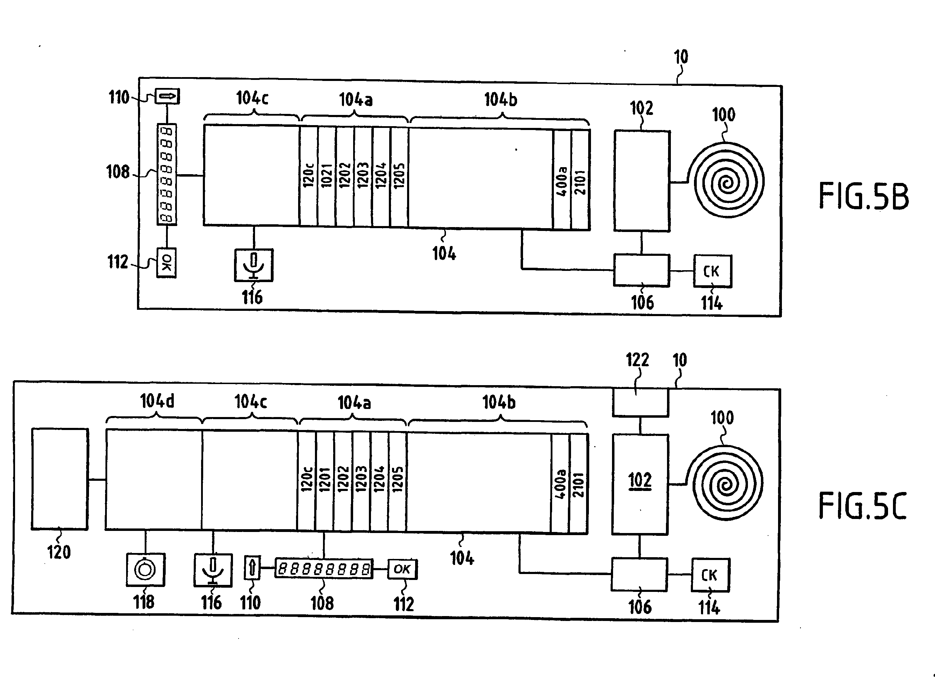

Trois exemples de réalisation nullement limitatifs de dispositifs portatifs sont illustrés aux figures 5A, 5B et 5C.

La figure 5A montre un dispositif portatif de structure basique qui se présente sous la forme d'un petit objet électronique au format carte de visite ou carte de crédit comportant une partie émission/réception de données (moyens de communication) constituée par une boucle magnétique 100, une partie de traitement reliée à une sortie de la boucle magnétique et constitué d'un circuit de codage/décodage 102, une mémoire 104 pour le stockage des codes d'identification reliée à ce circuit et un circuit d'alimentation (par exemple une pile 106) relié à la fois à la partie de traitement et à la mémoire. Dans cette configuration, la partie émission/réception de données permet d'assurer à la fois une communication sans contacts électriques avec un autre dispositif portable 10 et avec l'ensemble informatique local 18. Comme dans l'ensemble informatique distant 12, la mémoire de ce dispositif portatif est de préférence organisée en deux zones avec une première zone 104a (zone émetteur) destinée à recevoir les codes d'identification susceptibles d'être communiqués à un dispositif portatif d'un autre utilisateur et une seconde zone 104b (zone récepteur) pour stocker les codes d'identification reçus lors des échanges avec les autres utilisateurs. Ce processus de communication entre deux dispositifs portatifs est bien entendu réciproque, les codes d'identification de la zone émetteur du premier dispositif étant recopiés dans la zone récepteur du second dispositif et vice-versa.

Un second exemple de réalisation d'un dispositif portatif conforme à l'invention est illustré à la figure 5B. Cette réalisation présente une structure plus élaborée que la précédente tout en gardant un format réduit semblable.

Ce dispositif comporte en effet outre les éléments déjà cités comportant les mêmes références, un écran d'affichage 108 très simple, de préférence d'une ou deux lignes de caractère, permettant d'une part de visualiser les différents codes d'identification émetteur qui peuvent être sélectionnés individuellement au moyen d'un bouton de défilement 110 et d'un bouton de sélection 112 (l'utilisateur peut ainsi choisir les codes à transférer et donc les données à communiquer à son interlocuteur) et d'autre part d'afficher certains messages préenregistrés du type mémoire vide (carte vierge) ou pleine ou encore pile faible (à changer). Si le dispositif est avantageusement muni d'un circuit d'horloge-calendrier 314, cet écran peut aussi afficher une date et une heure pouvant être mémorisées conjointement ou non avec les codes d'identification échangés. Cette particularité est intéressante lorsque le dispositif portatif est aussi muni d'un microphone 116 permettant d'enregistrer de façon numérique un commentaire de l'utilisateur et de son interlocuteur (cet enregistrement pouvant être initialisé et arrêté via l'écran et les boutons de commande). Dans ce cas particulier, la mémoire est avantageusement pourvue d'une troisième zone mémoire 104c (zone annotation) pour stocker ces commentaires. En fin de journée, à l'issue de la manifestation (ou lorsque la zone mémoire correspondante est pleine), ces commentaires seront transmis comme les codes d'identification (et les dates et heures d'échange) vers l'ensemble informatique distant 12 à partir duquel l'utilisateur pourra ultérieurement les consulter ou se les faire adresser.

La figure 5C montre encore une version plus élaborée avec l'adjonction d'un moyen d'enregistrement visuel comme une caméra miniature 118 (et son circuit de traitement associé) en liaison avec une quatrième zone mémoire 104d. Ce dispositif portatif peut comporter également une seconde partie d'émission/réception de données 120 reliée à la mémoire 104 pour transférer les codes d'identification vers l'ensemble informatique distant 12 via le réseau 14 sans passer par l'ensemble informatique local 18. Ce module interface peut consister en une simple puce lisible par un lecteur de carte à puce classique présent dans ou relié au terminal utilisateur 16, ou bien en un module de liaison sans fil avec le réseau de communication 14. En outre, une interface 122 avec un dispositif externe (clavier, tablette graphique, etc.) reliée à la partie de traitement 102 est de préférence prévue pour augmenter encore les fonctionnalités du dispositif portatif, notamment en matière de saisie d'annotations.

## Revendications

1. Procédé d'échange de données numériques entre une pluralité d'utilisateurs, chacun de ces utilisateurs étant muni d'un dispositif portatif d'émission et de réception de données numériques (10), **caractérisé en ce que** l'on entre au niveau d'un premier ensemble informatique (12) lesdites données numériques destinées à être échangées entre les utilisateurs, on affecte à chacune des données numériques saisies un code d'identification unique, on transfère chacun des codes d'identification uniques ainsi affectés sur le dispositif portatif de l'utilisateur dont on a entré préalablement au niveau dudit premier ensemble informatique les données numériques associées aux dits codes d'identification uniques, on établit des liaisons entre les dispositifs portatifs de différents utilisateurs au cours desquelles ils se transmettent entre eux au moins un de leurs dits codes d'identification uniques, on transfère depuis chacun des dispositifs portatifs et vers ledit premier ensemble informatique les codes d'identification uniques ainsi reçus, et on met à disposition de chaque utilisateur desdits dispositifs portatifs les données numériques associées à ces codes d'identification uniques ainsi transférés.

2. Procédé selon la revendication 1, **caractérisé en ce que** ladite première étape d'entrée des données numériques au niveau dudit premier ensemble informatique est effectuée au travers d'une interface utilisateur de cet ensemble informatique.

3. Procédé selon la revendication 2, **caractérisé en ce que** ladite interface utilisateur est choisie parmi l'une des interfaces suivantes: Web, e-mail, terminal.

4. Procédé selon la revendication 1, **caractérisé en ce que** ladite deuxième étape d'affectation dudit code d'identification à chacune desdites données numériques par ledit premier ensemble informatique est effectuée selon un processus de création aléatoire.

5. Procédé selon la revendication 1, **caractérisé en ce que** ladite deuxième étape d'affectation dudit code d'identification à chacune desdites données numériques par ledit premier ensemble informatique est effectuée à partir d'un numéro de carte unique entré par l'utilisateur au niveau dudit premier ensemble informatique.

6. Procédé selon la revendication 5, **caractérisé en ce que** lesdits codes d'identification uniques d'un utilisateur dérivent dudit numéro de carte unique identifiant ledit dispositif portatif de l'utilisateur.

7. Procédé selon la revendication 1, **caractérisé en ce que** ladite troisième étape de transfert dudit code d'identification unique vers ledit dispositif portatif est effectuée par l'intermédiaire d'un second ensemble informatique local (18).

8. Procédé selon la revendication 1, **caractérisé en ce que** ladite quatrième étape de mise en relation de deux dispositifs portatifs est effectuée par une liaison de type électrique, magnétique, acoustique, optique ou radio-fréquence.

9. Procédé selon la revendication 1, **caractérisé en ce que** ladite cinquième étape de transfert dudit code d'identification unique vers ledit premier ensemble informatique est effectuée par l'intermédiaire d'un second ensemble informatique (18).

10. Procédé selon la revendication 7 ou la revendication 9, **caractérisé en ce que** ledit second ensemble informatique local (18) est relié audit premier ensemble informatique au travers d'un réseau de communication (14).

11. Procédé selon la revendication 1, **caractérisé en ce que** ladite sixième étape de mise à disposition desdites données numériques aux utilisateurs est effectuée par un envoi de ces données numériques à une adresse électronique de l'utilisateur.

12. Procédé selon la revendication 1, **caractérisé en ce que** ladite sixième étape de mise à disposition desdites données numériques aux utilisateurs est effectuée par une consultation de ces données numériques directement au niveau dudit premier ensemble informatique par l'intermédiaire d'un réseau de communication (14).

13. Système d'échange de données numériques entre une pluralité utilisateurs, **caractérisé en ce qu'**il comporte :
un premier ensemble informatique (12) dans lequel sont entrées et stockées lesdites données numériques destinées à être échangées entre les utilisateurs et un code d'identification unique affecté à chacune de ces données numériques,
un dispositif portatif d'émission et de réception de données numériques (10) porté par chacun de cette pluralité d'utilisateurs et dans lequel sont mémorisés lesdits codes d'identification uniques correspondant aux données numériques associées audit dispositif portatif,
chacun desdits dispositifs portatifs comportant des moyens de communication (100, 102 ; 120) pour se transmettre entre eux lesdits codes d'identification uniques et pour transférer vers ledit premier ensemble informatique lesdits codes d'identification uniques ainsi reçus,
ledit premier ensemble informatique mettant alors à disposition de chaque utilisateur desdits dispositifs portatifs lesdites données numériques associées à ces codes d'identification uniques ainsi transférés.

14. Système selon la revendication 13, **caractérisé en ce qu'**il comporte en outre un second ensemble informatique local (18) pour recevoir desdits dispositifs portatifs lesdits codes d'identification uniques à transférer vers ledit premier ensemble informatique.

15. Système selon la revendication 14, **caractérisé en ce que** ledit second ensemble informatique est relié audit premier ensemble informatique au travers d'un réseau de communication (14).

16. Système selon l'une quelconque des revendications 13 à 15, **caractérisé en ce que** chacun desdits dispositifs portatifs comporte une première partie d'émission/réception de données (100) pour le transfert desdits codes d'identification, une partie de traitement (102) reliée à ladite première partie d'émission/réception de données, une mémoire (104) reliée à ladite partie de traitement pour le stockage des codes d'identification reçus, et une partie d'alimentation (106) reliée à la fois à ladite partie de traitement et à ladite mémoire pour assurer une autonomie dudit dispositif portatif.

17. Système selon la revendication 16, **caractérisé en ce que** chacun desdits dispositifs portatifs comporte en outre un moyen d'affichage (108) pour au moins visualiser lesdits codes d'identification uniques.

18. Système selon la revendication 17, **caractérisé en ce que** chacun desdits dispositifs portatifs comporte en outre au moins un bouton de défilement (110) et un bouton de sélection (112) pour choisir à partir dudit moyen d'affichage lesdits codes d'identification uniques à transmettre.

19. Système selon la revendication 16, **caractérisé en ce que** chacun desdits dispositifs portatifs comporte en outre un circuit d'horloge-calendrier (114) pour permettre une mémorisation d'une date et d'une heure déterminées.

20. Système selon la revendication 16, **caractérisé en ce que** chacun desdits dispositifs portatifs comporte en outre un moyen d'enregistrement sonore (116) pour enregistrer un commentaire et le mémoriser dans ladite mémoire au niveau d'une troisième zone de stockage (104c).

21. Système selon la revendication 16, **caractérisé en ce que** chacun desdits dispositifs portatifs comporte en outre un moyen d'enregistrement visuel (118) pour enregistrer des images et les mémoriser dans ladite mémoire au niveau d'une quatrième zone de stockage (104d).

22. Système selon la revendication 16, **caractérisé en ce que** chacun desdits dispositifs portatifs comporte en outre une seconde partie d'émission/réception de données (120) pour transférer lesdits codes d'identification uniques vers ledit premier ensemble informatique via ledit réseau de communication sans passer par ledit second ensemble informatique.

23. Système selon la revendication 16, **caractérisé en ce que** chacun desdits dispositifs portatifs comporte en outre une interface (122) avec un dispositif externe pour notamment permettre la saisie d'annotations.

## Claims

1. A method of exchanging digital data between a plurality of users, each of the users being provided with a portable device (10) for sending and receiving digital data, the method being **characterised in that** it comprises the following steps: inputting said digital data for exchanging between users into a first computer installation (12); allocating one unique identity code to each input item of digital data; transferring each of the unique identity codes as allocated in this way to the portable device of the user whose digital data associated with said unique identity codes has previously been input into said first computer installation; establishing connections between the portable devices of different users, over which the devices transmit between each other their at least one unique identity codes; transferring the unique identity codes received in this way from each of the portable devices to said first computer installation; and making available to each user of said portable devices the digital data associated with said unique identity codes as transferred in this way.

2. A method according to claim 1, **characterised in that** said first step of inputting digital data into said first computer installation is performed via a user interface of said computer installation.

3. A method according to claim 2, **characterised in that** said user interface is selected from one of the following interfaces: Web; e-mail; terminal.

4. A method according to claim 1, **characterised in that** said second step in which said first computer installation allocates said identity code to said digital data is performed by a random creation process.

5. A method according to claim 1, **characterised in that** said second step in which said first computer installation allocates said identity code to said digital data is performed from a unique card number entered by the user to said first computer installation.

6. A method according to claim 5, **characterised in that** said unique identity codes relating to a user derive from said unique card number identifying said user's portable device.

7. A method according to claim 1, **characterised in that** said third step of transferring said unique identity code to said portable device is performed via a second computer installation (18) that is local.

8. A method according to claim 1, **characterised in that** said fourth step of putting two portable devices into communication with each other is performed over a connection of the electrical, magnetic, acoustic, optical, or radio frequency type.

9. A method according to claim 1, **characterised in that** said fifth step of transferring said unique identity code to said first computer installation is performed via a second computer installation (18).

10. A method according to claim 7 or claim 9, **characterised in that** said local second computer installation (18) is connected to said first computer installation via a communications network (14).

11. A method according to claim 1, **characterised in that** said sixth step of making said digital data available to users is performed by sending said digital data to an e-mail address of the user.

12. A method according to claim 1, **characterised in that** said sixth step of making said digital data available to users is performed by consulting said digital data directly at said first computer installation via a communications network (14).

13. A system for exchanging digital data between a plurality of users, the system being **characterised in that** it comprises:
a first computer installation (12) in which said digital data for exchanging between said users is input and stored together with one unique identity code allocated to each of said items of digital data;
a portable device for transmitting and receiving digital data (10) carried by each of said plurality of users and having stored therein said unique identity codes corresponding to the digital data associated with said portable device;
each of said portable devices having communications means (100, 102; 120) enabling them to exchange between one another said unique identity codes and to transfer to said first computer installation said unique identity codes as received in this way; and
said first computer installation then making available to each user of said portable devices said digital data associated with said unique identity codes as transferred in this way.

14. A system according to claim 13, **characterised in that** it further comprises a second computer installation (18) that is local for receiving from said portable devices said unique identity codes that are to be transferred to said first computer installation.

15. A system according to claim 14, **characterised in that** said second computer installation is connected to said first computer installation via a communications network (14).

16. A system according to any one of claims 13 to 15, **characterised in that** each of said portable devices comprises a first portion for sending and receiving data (100) for transferring said identity codes, a processor portion (102) connected to said first portion for sending and receiving data, a memory (104) connected to said processor portion for storing received identity codes, and a power supply portion (106) connected both to said processor portion and to said memory enabling said portable device to operate without an external power supply.

17. A system according to claim 16, **characterised in that** each of said portable devices further comprises display means (108) for displaying at least said unique identity codes.

18. A system according to claim 17, **characterised in that** each of said portable devices further comprises at least one scroll button (110) and an enter button (112) for using said display means to enable said identity codes for transmission to be selected.

19. A system according to claim 16, **characterised in that** each of said portable devices further comprises a clock circuit (114) enabling determined dates and times to be stored.

20. A system according to claim 16, **characterised in that** each of said portable devices further comprises sound recording means (116) for recording a commentary and for storing it in said memory in a third storage zone (104c).

21. A system according to claim 16, **characterised in that** each of said portable devices further comprises visual recording means (118) for recording images and storing them in said memory in a fourth storage zone (104d).

22. A system according to claim 16, **characterised in that** each of said portable devices further comprises a second portion for sending and receiving data (120) in order to transfer said unique identity codes to said first computer installation via said communications network without passing via said second computer installation.

23. A system according to claim 16, **characterised in that** each of said portable devices further comprises an interface (122) with an external device, in particular to enable annotations to be input.

## Patentansprüche

1. Verfahren zum digitalen Datenaustausch zwischen einer Vielzahl von Benutzern, wobei jeder dieser Benutzer mit einer tragbaren Sende- und Empfangseinrichtung für digitale Daten (10) ausgestattet ist, **dadurch gekennzeichnet, daß** im Bereich einer ersten Informatikeinheit (12) die digitalen Daten, die dazu bestimmt sind, unter den Benutzern ausgetauscht zu werden, eingegeben werden, jedem der eingegebenen Daten ein einzelner Identifikationscode zugeteilt wird, jeder der so zugeteilten einzelnen Identifikationscodes auf die tragbare Vorrichtung des Benutzers übertragen wird, in dessen erste Informatikeinheit vorher die digitalen Daten eingegeben wurden, die den einzelnen Identifikationscodes zugeordnet sind, Verbindungen zwischen den tragbaren Vorrichtungen von verschiedenen Benutzern hergestellt werden, während derer sie zwischen sich wenigstens einen ihrer einzelnen Identifikationscodes übertragen, dann von jeder der tragbaren Einrichtungen zu der ersten Informatikeinheit die so erhaltenen einzelnen Identifikationscodes übertragen werden und die digitalen Daten, die diesen so übertragenen einzelnen Identifikationscodes zugeordnet sind, jedem Benutzer der tragbaren Einrichtungen zur Verfügung gestellt werden.

2. Verfahren nach Anspruch 1, **dadurch gekennzeichnet, daß** der erste Schritt der Eingabe der digitalen Daten im Bereich der ersten Informatikeinheit über eine Benutzerschnittstelle dieser Informatikeinheit erfolgt.

3. Verfahren nach Anspruch 2, **dadurch gekennzeichnet, daß** die Benutzerschnittstelle unter einer der folgenden Schnittstellen ausgewählt wird: Web, e-Mail, Terminal.

4. Verfahren nach Anspruch 1, **dadurch gekennzeichnet, daß** der zweite Schritt der Zuteilung des Identifikationscodes jedem der digitalen Daten durch die erste Informatikeinheit nach einem Zufallserzeugungsprozeß erfolgt.

5. Verfahren nach Anspruch 1, **dadurch gekennzeichnet, daß** der zweite Schritt der Zuteilung des Identifikationscodes jedem der digitalen Daten durch die erste Informatikeinheit auf Basis einer einzelnen Kartennummer, die vom Benutzer im Bereich der ersten Informatikeinheit eingegeben wird, erfolgt.

6. Verfahren nach Anspruch 5, **dadurch gekennzeichnet, daß** die einzelnen Identifikationscodes eines Benutzers von der einzelnen Kartennummer abgeleitet werden, die die tragbare Einrichtung des Benutzers identifiziert.

7. Verfahren nach Anspruch 1, **dadurch gekennzeichnet, daß** der dritte Schritt der Übertragung des einzelnen Identifikationscodes zu der tragbaren Vorrichtung mit Hilfe einer zweiten lokalen Informatikeinheit (18) erfolgt.

8. Verfahren nach Anspruch 1, **dadurch gekennzeichnet, daß** der vierte Schritt der Herstellung einer Verbindung zwischen zwei tragbaren Einrichtungen durch eine Verbindung elektrischen, magnetischen, akustischen, optischen Typs oder eine Funkfrequenzverbindung erfolgt.

9. Verfahren nach Anspruch 1, **dadurch gekennzeichnet, daß** der fünfte Schritt der Übertragung des einzelnen Identifikationscodes zu der ersten Informatikeinheit mit Hilfe einer zweiten Informatikeinheit (18) erfolgt.

10. Verfahren nach Anspruch 7 oder Anspruch 9, **dadurch gekennzeichnet, daß** die zweite lokale Informatikeinheit (18) mit der ersten Informatikeinheit durch ein Kommunikationsnetz (14) verbunden ist.

11. Verfahren nach Anspruch 1, **dadurch gekennzeichnet, daß** der sechste Schritt der Bereitstellung der digitalen Daten für die Benutzer durch Senden dieser digitalen Daten an eine elektronische Adresse des Benutzers erfolgt.

12. Verfahren nach Anspruch 1, **dadurch gekennzeichnet, daß** der sechste Schritt der Bereitstellung der digitalen Daten für die Benutzer durch ein Abfragen dieser digitalen Daten direkt im Bereich der ersten Informatikeinheit über ein Kommunikationsnetz (14) erfolgt.

13. System für einen digitalen Datenaustausch zwischen einer Vielzahl von Benutzern, **dadurch gekennzeichnet, daß** es umfaßt:
eine erste Informatikeinheit (12), in die die digitalen Daten, die dazu bestimmt sind, unter den Benutzern ausgetauscht zu werden, und ein einzelner Identifikationscode, der jedem dieser digitalen Daten zugeteilt ist, eingegeben und in dieser gespeichert werden,
eine tragbare Sende- und Empfangseinrichtung für die digitalen Daten (10), die von jedem dieser Vielzahl von Benutzern getragen wird, und in der die einzelnen Identifikationscodes gespeichert sind, die den der tragbaren Einrichtung zugeteilten digitalen Daten entsprechen,
wobei jede der tragbaren Einrichtungen Kommunikationsmittel (100, 102; 120) umfaßt, um untereinander die einzelnen Kommunikationscodes auszutauschen und die so erhaltenen einzelnen Identifikationscodes zu der ersten Informatikeinheit zu übertragen,
wobei die erste Informatikeinheit nun jedem Benutzer der tragbaren Einrichtungen die digitalen Daten, die diesen so übertragenen einzelnen Identifikationscodes zugeteilt sind, zur Verfügung stellt.

14. System nach Anspruch 13, **dadurch gekennzeichnet, daß** es ferner eine zweite lokale Informatikeinheit (18) umfaßt, um von den tragbaren Einrichtungen die zu der ersten Informatikeinheit zu übertragenden einzelnen Identifikationscodes zu empfangen.

15. System nach Anspruch 14, **dadurch gekennzeichnet, daß** die zweite Informatikeinheit mit der ersten Informatikeinheit über ein Kommunikationsnetz (14) verbunden ist.

16. System nach einem der Ansprüche 13 bis 15, **dadurch gekennzeichnet, daß** jede der tragbaren Einrichtungen einen ersten Sende-/Empfangsteil von Daten (100) für die Übertragung der Identifikationscodes, einen Bearbeitungsteil (102), der mit dem ersten Datensende-/-empfangsteil verbunden ist, einen Speicher (104), der mit dem Bearbeitungsteil zur Speicherung der empfangenen Identifikationscodes verbunden ist, und einen Versorgungsteil (106) umfaßt, der sowohl mit dem Bearbeitungsteil als auch mit dem Speicher verbunden ist, um eine Autonomie der tragbaren Einrichtung sicherzustellen.

17. System nach Anspruch 16, **dadurch gekennzeichnet, daß** jede der tragbaren Einrichtungen ferner ein Anzeigemittel (108) umfaßt, um zumindest die einzelnen Identifikationscodes anzuzeigen.

18. System nach Anspruch 17, **dadurch gekennzeichnet, daß** jede der tragbaren Einrichtungen ferner wenigstens einen Durchlaufknopf (110) und einen Auswahlknopf (112) umfaßt, um aus dem Anzeigemittel die zu übertragenden einzelnen Identifikationscodes auszuwählen.

19. System nach Anspruch 16, **dadurch gekennzeichnet, daß** jede der tragbaren Einrichtungen ferner eine Zeit-Datum-Schaltung (114) umfaßt, um die Speicherung eines bestimmten Datums und einer bestimmten Uhrzeit zu ermöglichen.

20. System nach Anspruch 16, **dadurch gekennzeichnet, daß** jede der tragbaren Einrichtungen ferner ein Tonaufzeichnungsmittel (116) umfaßt, um einen Kommentar aufzuzeichnen und diesen in dem Speicher im Bereich einer dritten Speicherzone (1 04c) zu speichern.

21. System nach Anspruch 16, **dadurch gekennzeichnet, daß** jede der tragbaren Einrichtungen ferner ein visuelles Aufzeichnungsmittel (118) umfaßt, um Bilder aufzuzeichnen und diese in dem Speicher im Bereich einer vierten Speicherzone (1 04d) zu speichern.

22. System nach Anspruch 16, **dadurch gekennzeichnet, daß** jede der tragbaren Einrichtungen ferner einen zweiten Datensende-/-empfangsteil (120) umfaßt, um die einzelnen Identifikationsdaten zu der ersten Informatikeinheit über das Kommunikationsnetz zu übertragen, ohne über die zweite Informatikeinheit zu gehen.

23. System nach Anspruch 16, **dadurch gekennzeichnet, daß** jede der tragbaren Einrichtungen ferner eine Schnittstelle (122) mit einer externen Vorrichtung umfaßt, um insbesondere die Eingabe von Anmerkungen zu ermöglichen.
